# FASCICULE DE BREVET EUROPEEN

(11) **EP 0 537 084 B1**
(45) Date de publication et mention de la délivrance du brevet: **06.03.1996**
(21) Numéro de dépôt: 92420302.9
(22) Date de dépôt: 10.09.1992
(51) Int. Cl.: H01H 71/12, H02H 3/093

(54) **Disjoncteur à verrouillage sélectif**
Schutzschalter mit selektiver Verriegelung
Circuit breaker with selective locking

(30) Priorité: 10.10.1991 FR 9112600
(43) Date de publication de la demande: 14.04.1993
(73) Titulaire: SCHNEIDER ELECTRIC SA, F-92100 Boulogne-Billancourt (FR)
(72) Inventeur: Piney, Philippe, F-38050 Grenoble Cédex 9 (FR)
(74) Mandataire: Jouvray, Marie-Andrée

(56) Documents cités:
- EP-A- 0 068 934
- EP-A- 0 193 447
- EP-A- 0 432 054

## Description

L'invention concerne un disjoncteur comportant des contacts, un mécanisme d'actionnement des contacts et un déclencheur électronique fournissant à un dispositif de commande du mécanisme d'actionnement un signal de déclenchement pour provoquer l'ouverture des contacts en cas de défaut sur un réseau à surveiller, le dispositif de commande du mécanisme d'actionnement comportant des moyens de verrouillage du mécanisme d'actionnement en position d'ouverture, et le déclencheur comportant des moyens de détection du type de défaut.

Certains disjoncteurs classiques comportent des moyens de verrouillage destinés à verrouiller les contacts en position d'ouverture. Ceci est généralement réalisé au moyen d'une clé agissant mécaniquement sur le mécanisme d'actionnement ou sur sa commande et interdisant la fermeture des contacts tant qu'elle est en position de verrouillage.

L'invention a pour but de perfectionner ce type de disjoncteur de manière à l'adapter au mieux aux besoins de l'utilisateur et à privilégier, en fonction de l'installation dans laquelle il est disposé, soit la continuité de service soit la sécurité.

Ce but est atteint par le fait que le déclencheur comporte des moyens de sélection des défauts devant entraîner un verrouillage, le disjoncteur comportant des moyens de commande de verrouillage connectés au déclencheur et contrôlant les moyens de verrouillage de manière à verrouiller le mécanisme d'actionnement en position d'ouverture lorsque le défaut ayant conduit au déclenchement correspond à un des défauts sélectionnés par les moyens de sélection.

Ainsi, tandis que les moyens de verrouillage connus privilégiaient obligatoirement la sécurité, l'invention permet à l'utilisateur de moduler à sa convenance l'importance qu'il accorde à la sécurité et à la continuité de service. Dans le cas extrême, si la continuité de service est considérée comme prioritaire, le verrouillage peut être supprimé. A titre d'exemple non limitatif, le verrouillage peut être automatique lorsque le disjoncteur s'est ouvert en raison d'un défaut dû à un court-circuit (défaut instantané ou court-retard) ou d'un défaut homopolaire, le disjoncteur pouvant par contre être réarmé normalement en cas de surcharge (défaut long retard).

La sélection des défauts devant entraîner un verrouillage peut être effectuée au moyen d'un commutateur connecté directement à l'unité de traitement du déclencheur, ou à une interface reliant l'unité de traitement aux moyens de commande de verrouillage, ou au moyen d'interrupteurs destinés à relier sélectivement l'unité de traitement aux moyens de commande de verrouillage.

Selon un mode de réalisation préférentiel, les moyens de commande de verrouillage comportent une bobine alimentée lorsqu'un ordre de verrouillage lui est appliqué par le déclencheur.

Dans une première variante, la bobine actionne directement un organe mécanique de verrouillage du mécanisme d'actionnement.

Si le dispositif de commande du mécanisme d'actionnement est un dispositif de commande électromécanique permettant de contrôler électriquement, par télécommande, la fermeture du disjoncteur, dans une seconde variante le dispositif de commande électromécanique peut comporter un électroaimant connecté à une source d'alimentation par un interrupteur de commande, les moyens de verrouillage comportant un contact, normalement fermé, disposé en série avec ledit interrupteur de commande, et dont l'ouverture est contrôlée par ladite bobine. Dans une troisième variante il peut comporter un électroaimant de fermeture connecté à une source d'alimentation par l'intermédiaire d'un organe de commande, normalement fermé, dont l'ouverture suivie d'une fermeture provoque la fermeture des contacts du disjoncteur, la bobine contrôlant un contact, normalement ouvert, connecté en parallèle sur ledit organe de commande.

D'autres avantages et caractéristiques ressortiront plus clairement de la description qui va suivre de modes particuliers de réalisation de l'invention, donnés à titre d'exemples non limitatifs et représentés aux dessins annexés sur lesquels:

La figure 1 illustre, sous forme de schéma-bloc, un disjoncteur selon l'invention.

Les figures 2 et 3 représentent deux variantes du déclencheur d'un disjoncteur selon la figure 1.

Les figures 4 et 5 illustrent deux variantes des dispositifs de commande de verrouillage d'un disjoncteur selon la figure 1.

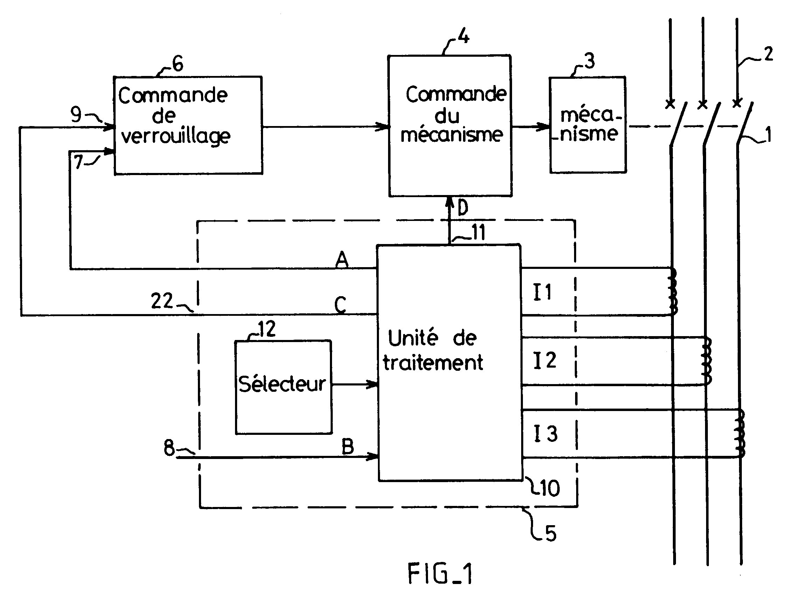

Le disjoncteur illustré sur la figure 1 comporte des contacts 1 disposés dans un réseau électrique 2 à protéger. De façon classique, l'ouverture et la fermeture des contacts sont contrôlés par un mécanisme d'actionnement 3, lui-même contrôlé par un dispositif de commande 4. Des valeurs représentatives des courants parcourant le réseau 2 sont appliquées aux entrées d'un déclencheur électronique 5. Celui-ci fournit au dispositif de commande 4 un signal de déclenchement D destiné à provoquer l'ouverture des contacts 1 en cas de défaut, par exemple surcharge, court-circuit ou défaut homopolaire, sur le réseau 2.

Le dispositif 4 de commande du mécanisme d'actionnement des contacts comporte des organes permettant de verrouiller le mécanisme en position d'ouverture des contacts. Ces organes de verrouillage sont contrôlés par un dispositif 6 de commande de verrouillage. Lorsque le dispositif 6 reçoit (entrée 7) un ordre de verrouillage A il commande, par l'intermédiaire du dispositif 4 et du mécanisme d'actionnement 3, le maintien des contacts 1 en position d'ouverture. La fermeture des contacts n'est autorisée que par application d'un ordre d'acquittement B sur une entrée 8 du déclencheur, conduisant à l'application d'un ordre de déverrouillage C sur une entrée 9 du dispositif 6 de commande de verrouillage.

Sur la figure 1, seuls les éléments du déclencheur 5 indispensables à la compréhension de l'invention sont représentés. Le déclencheur 5 comporte une unité de traitement 10, par exemple à microprocesseur, recevant, en entrée, des signaux analogiques (I1,I2,I3) représentatifs des courants parcourant le réseau 2. L'unité de traitement compare ces signaux à des seuils prédéterminés et fournit le cas échéant (sortie I1) un signal de déclenchement au dispositif de commande (4).

Dans le mode de réalisation représenté à la figure 1, un dispositif 12 de sélection des défauts devant entraîner un verrouillage est connecté à l'unité de traitement 10. Celle-ci comporte classiquement des moyens de détection du type de défaut permettant de mettre en mémoire la nature du défaut, long retard, court retard, instantané ou homopolaire, ayant conduit au déclenchement. Ces informations peuvent être affichées sur le déclencheur et/ou transmises à un dispositif externe de supervision (non représenté). L'unité de traitement 10 compare ces informations relatives à la nature du défaut et les informations fournies par le dispositif 12 de sélection et produit un ordre de verrouillage lorsque le défaut correspond à l'un des défauts sélectionnés par le dispositif 12.

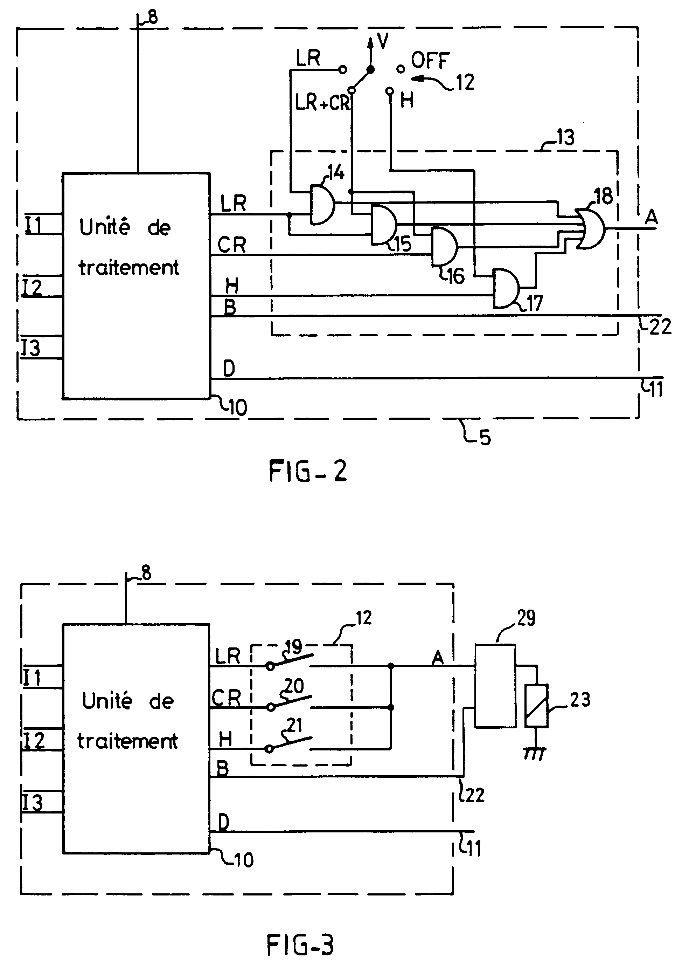

Dans la variante représentée à la figure 2, le dispositif 12 de sélection est disposé en sortie de l'unité de traitement. Il comporte un commutateur dont le point commun est connecté à une tension d'alimentation V. Sur la figure le commutateur comporte quatre positions correspondant sélectivement à la sélection des défauts suivants: long retard (LR), long retard et court retard (LR + CR), homopolaire (H) et aucun défaut (OFF). Un circuit logique 13 est connecté aux sorties du commutateur et à des sorties de l'unité de traitement sur lesquelles un signal est appliqué sélectivement lorsque le défaut correspondant a conduit à un déclenchement. Dans le mode de réalisation particulier représenté sur la figure, trois défauts étant susceptibles de conduire à un ordre de verrouillage, les sorties de l'unité de traitement (LR,CR,H) correspondant à ces trois défauts, sont connectées au circuit logique. Le circuit logique représenté est constitué de quatre portes ET. La porte 14 est reliée à la sortie LR de l'unité de traitement et à la sortie LR du commutateur. Elle fournit donc un signal logique 1 lorsque le commutateur est sur la position LR et qu'un défaut long retard a conduit au déclenchement. La porte 15 est connectée à la sortie LR de l'unité de traitement et à la sortie (LR + CR) du commutateur, la porte 16 à la sortie (CR) de l'unité de traitement et à la sortie (LR + CR) du commutateur, et la porte 17 est connectée aux sorties (H) de l'unité de traitement et du commutateur. Une porte OU 18, dont les entrées sont connectées respectivement aux sorties des portes ET, 14 à 17, fournit en sortie un ordre de verrouillage lorsque le défaut détecté par l'unité de traitement correspond à l'un des défauts sélectionnés par le commutateur 12. Dans la position OFF de celui-ci aucun ordre de verrouillage n'est produit, quel que soit le type de défaut ayant conduit à un déclenchement.

Bien entendu le circuit logique peut être constitué de comparateurs de type analogiques aussi bien que de portes logiques du type décrit ci-dessus.

Dans la variante représentée à la figure 3, le dispositif de sélection est constitué par une série d'interrupteurs connectés en sortie de l'unité de traitement. Un interrupteur est disposé sur chacune des sorties de l'unité de traitement fournissant un signal correspondant à un type de défaut particulier, par exemple un interrupteur 19 connecté à la sortie associée à un défaut long retard (LR), un interrupteur 20 connecté à la sortie associée à un défaut court retard (CR) et un interrupteur 21 connecté à la sortie associée à un défaut homopolaire (H). Les autres extrémités des interrupteurs sont connectées à la sortie du déclencheur destinée à fournir un ordre de verrouillage. Si, seul l'interrupteur 19 est fermé, seul un défaut long retard entraîne l'émission d'un ordre de verrouillage. Si les interrupteurs 19 et 20 sont fermés, un ordre de verrouillage sera produit aussi bien en présence d'un défaut court retard que d'un défaut long retard.

Selon une variante simplifiée (non représentée), les trois interrupteurs 19, 20 et 21, du dispositif 12 de la figure 3 peuvent être remplacés par un commutateur à 3 ou 4 positions, dont le point commun fournit le signal A, de manière à relier sélectivement ce point commun à l'une des sorties(LR, CR, H) de l'unité de traitement ou à une quatrième position (flottante ou à la masse) dans laquelle aucun ordre de verrouillage n'est produit.

Ainsi, les différentes variantes décrites ci-dessus permettent au déclencheur de produire un ordre de verrouillage si, et seulement si, le défaut détecté est l'un des défauts sélectionné par le dispositif 12.

Dans les différents modes de réalisation décrits ci-dessus, l'application d'un ordre d'acquittement sur l'entrée 8 du déclencheur produit un ordre de déverrouillage sur une sortie 22 du déclencheur.

Le dispositif de commande de verrouillage comporte de préférence une bobine 23 connectée de manière à être parcourue par un courant en présence d'un ordre de verrouillage. Comme représentée sur la figure 3, la bobine 23 est, par exemple, connectée à la sortie d'un circuit 29 de mise en mémoire sur l'entrée duquel est appliqué le signal A. Le signal B de déverrouillage est appliqué sur une entrée de remise à zéro du circuit 29 et son application coupe le courant dans la bobine 23.

Cette bobine peut comporter un plongeur (non représenté) agissant directement sur un organe de mécanisme d'actionnement de manière à empêcher la fermeture des contacts.

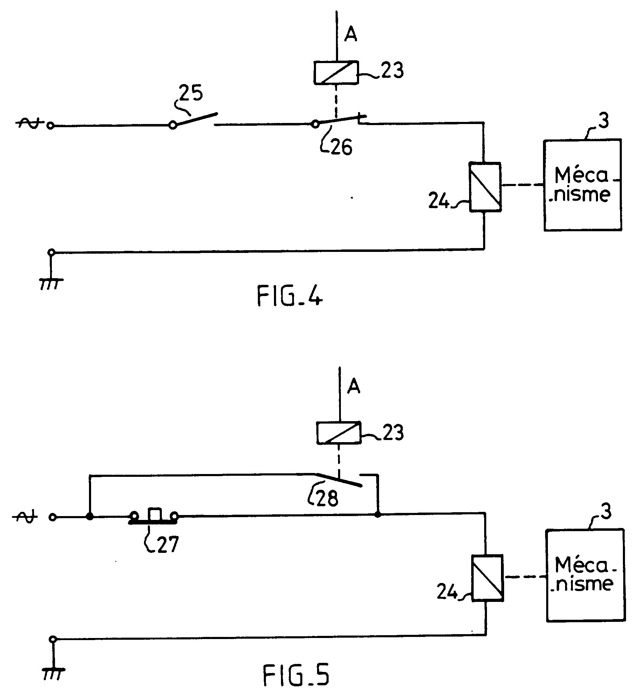

Sur les figures 4 et 5 le mécanisme d'actionnement 3 du disjoncteur est contrôlé par un électroaimant 24 permettant de commander électriquement, éventuellement à distance, le disjoncteur.

Dans le mode de réalisation de la figure 4, l'électroaimant 24 est connecté aux bornes d'une source de tension, alternative sur la figure par l'intermédiaire d'un interrupteur 25 de commande, la fermeture de l'interrupteur 25 provoquant la fermeture du disjoncteur. Le dispositif de verrouillage est constitué par un contact 26, normalement fermé, disposé en série avec l'interrupteur 25 dans le circuit d'alimentation de l'électroaimant 24. Le dispositif de commande de verrouillage est constitué par une bobine 23. Lorsqu'un ordre de verrouillage est appliqué à la bobine 23 par le déclencheur 5 (figures 1 à 3), celle-ci est parcourue par un courant et provoque l'ouverture du contact 26. L'alimentation de l'électroaimant 24 est alors interrompue quelle que soit la position de l'interrupteur 25, empêchant ainsi la fermeture du disjoncteur et le verrouillant en position d'ouverture.

Dans le mode de réalisation de la figure 5, l'électroaimant 24 est un électroaimant de fermeture connecté de manière à fonctionner en antipompage. L'électroaimant 24 est connecté aux bornes d'une source de tension, alternative sur la figure, par l'intermédiaire d'un interrupteur 27, par exemple un bouton-poussoir, normalement fermé. Le disjoncteur comporte un électroaimant d'ouverture (non représenté) pouvant être contrôlé par un bouton-poussoir d'ouverture ou par un ordre de déclenchement du déclencheur. Après ouverture, sur défaut en réponse à un ordre de déclenchement, ou volontaire par actionnement du bouton-poussoir d'ouverture, le disjoncteur ne peut être refermé qu'après une ouverture du bouton poussoir 27 suivie de sa fermeture (fonctionnement en antipompage). Dans ce mode de réalisation, un contact 28 de verrouillage est disposé en parallèle sur le bouton-poussoir de fermeture 27. Ce contact 28, normalement ouvert, est fermé par la bobine 23 lorsque celle-ci reçoit un ordre de verrouillage du déclencheur 5, empêchant ainsi l'interruption de l'alimentation de l'électroaimant de fermeture 24 et verrouillant le disjoncteur en position ouvert. Pour refermer le disjoncteur, un ordre d'acquittement doit être appliqué au déclencheur qui produit un ordre de déverrouillage ouvrant le contact 28 et autorisant l'actionnement du disjoncteur par le bouton-poussoir de fermeture 27.

Dans le cas où le disjoncteur comporte une commande manuelle de fermeture agissant directement sur le mécanisme d'actionnement des contacts, le dispositif de commande de verrouillage doit bien entendu également verrouiller cette commande manuelle. Pour cela, la bobine de verrouillage peut, par exemple, agir mécaniquement, par l'intermédiaire d'un plongeur, sur le bouton de fermeture manuelle.

L'invention n'est pas limitée aux modes de réalisation représentés. C'est ainsi, notamment, que la source de tension alimentant l'électroaimant 24 sur les figures 4 et 5 peut être une source de tension continue. De même le dispositif 12 de sélection peut permettre de sélectionner d'autres combinaisons de défaut que celles représentées, par exemple:
- court-circuit, correspondant à un défaut court retard ou instantané,
- long retard et protection terre,
- court-circuit et protection terre,
- long retard et court-circuit,
- long retard, court-circuit et protection terre.

## Revendications

1. Disjoncteur comportant des contacts (1), un mécanisme (3) d'actionnement des contacts et un déclencheur électronique (5) fournissant à un dispositif (4) de commande du mécanisme (3) d'actionnement un signal de déclenchement pour provoquer l'ouverture des contacts en cas de défaut sur un réseau (2) à surveiller, le dispositif (4) de commande du mécanisme d'actionnement comportant des moyens de verrouillage du mécanisme d'actionnement en position d'ouverture, et le déclencheur comportant des moyens de détection du type de défaut, disjoncteur caractérisé en ce que le déclencheur comporte des moyens (12) de sélection des défauts devant entraîner un verrouillage, le disjoncteur comportant des moyens (6) de commande de verrouillage connectés au déclencheur (5) et contrôlant les moyens de verrouillage de manière à verrouiller le mécanisme (3) d'actionnement en position d'ouverture lorsque le défaut ayant conduit au déclenchement correspond à un des défauts sélectionnés par les moyens de sélection (12).

2. Disjoncteur selon la revendication 1, caractérisé en ce que le déclencheur (5) comportant une unité de traitement (10), les moyens (12) de sélection sont connectés à l'unité de traitement.

3. Disjoncteur selon la revendication 1, caractérisé en ce que le déclencheur (5) comporte une interface (13) comportant des entrées connectées aux moyens de détection du type de défaut et des entrées connectées aux moyens (12) de sélection, et dont la sortie est connectée aux moyens (6) de commande de verrouillage.

4. Disjoncteur selon la revendication 1, caractérisé en ce que les moyens (12) de sélection comportent une pluralité d'interrupteurs (19,20,21) respectivement entre une entrée commune (9) de verrouillage des moyens (6,23) de commande de verrouillage et une sortie (LR,CR,H) correspondante des moyens de détection du type de défaut, la fermeture d'un interrupteur associé à un type de défaut prédéterminé entraînant le verrouillage du disjoncteur en position d'ouverture si le défaut détecté est de ce type.

5. Disjoncteur selon l'une quelconque des revendications 1 à 4, caractérisé en ce que le déclencheur comporte une entrée (8) d'acquittement et fournit (9) aux moyens (6) de commande de verrouillage un ordre de déverrouillage lorsqu'un ordre d'acquittement est appliqué sur l'entrée d'acquittement (8).

6. Disjoncteur selon l'une quelconque des revendications 1 à 5, caractérisé en ce que les moyens (6) de commande de verrouillage comportent une bobine (23) alimentée lorsqu'un ordre de verrouillage lui est appliqué par le déclencheur (5).

7. Disjoncteur selon la revendication 6, caractérisé en ce que la bobine (23) actionne directement un organe mécanique de verrouillage du mécanisme (3) d'actionnement.

8. Disjoncteur selon la revendication 6, caractérisé en ce que le dispositif (4) de commande du mécanisme d'actionnement (3) est un dispositif de commande électromécanique (24) permettant de contrôler électriquement, par télécommande, la fermeture du disjoncteur.

9. Disjoncteur selon la revendication 8, caractérisé en ce que le dispositif de commande électromécanique comportant un électroaimant (24) connecté à une source d'alimentation par un interrupteur de commande (25), les moyens de verrouillage comportent un contact (26), normalement fermé, disposé en série avec ledit interrupteur de commande (25), et dont l'ouverture est contrôlée par ladite bobine (23).

10. Disjoncteur selon la revendication 8, caractérisé en ce que le dispositif de commande électromécanique comporte un électroaimant (24) de fermeture connecté à une source d'alimentation par l'intermédiaire d'un organe de commande (27), normalement fermé, dont l'ouverture suivie d'une fermeture provoque la fermeture des contacts du disjoncteur, la bobine (23) contrôlant un contact (28), normalement ouvert, connecté en parallèle sur ledit organe de commande (27).

## Patentansprüche

1. Leistungsschalter mit Kontakten (1), einem Schaltmechanismus (3) zur Betätigung der Kontakte und einem elektronischen Auslöser (5), der ein Antriebsorgan (4) des Schaltmechanismus (3) mit einem Auslösesignal beaufschlagt, um das Öffnen der Kontakte bei Auftreten eines Fehlers in einem zu überwachenden Netz (2) zu bewirken, wobei das Antriebsorgan (4) des Schaltmechanismus Mittel zur Verriegelung des Schaltmechanismus in der Ausschaltstellung und der Auslöser Mittel zur Erfassung der Fehlerart umfassen, dadurch gekennzeichnet, daß der Auslöser Mittel (12) zur Einstellung der Fehler aufweist, die eine Verriegelung zur Folge haben sollen, wobei der Leistungsschalter Verriegelungs-Steuerorgane (6) umfaßt, die mit dem Auslöser (5) verbunden sind und die Verriegelungsmittel so ansteuern, daß der Schaltmechanismus (3) in der Ausschaltstellung verriegelt wird, wenn die Auslösung durch einen Fehler bewirkt wurde, der einem der an den Einstellmitteln (12) eingestellten Fehler entspricht.

2. Leistungsschalter nach Anspruch 1, dadurch gekennzeichnet, daß der Auslöser (5) eine Zentraleinheit (10) aufweist und die Einstellmittel (12) an die Zentraleinheit angeschlossen sind.

3. Leistungsschalter nach Anspruch 1, dadurch gekennzeichnet, daß der Auslöser (5) eine Schnittstelle (13) umfaßt, welche an die Mittel zur Erfassung der Fehlerart angeschlossene Eingänge sowie an die Einstellmittel (12) angeschlossene Eingänge aufweist, und deren Ausgang an die Verriegelungs-Steuerorgane (6) angeschlossen ist.

4. Leistungsschalter nach Anspruch 1, dadurch gekennzeichnet, daß die Einstellmittel (12) mehrere Schalter (19, 20, 21) umfassen, die jeweils zwischen einen gemeinsamen Verriegelungseingang (9) der Verriegelungs-Steuerorgane (6, 23) und einen zugeordneten Ausgang (LR, CR, H) der Mittel zur Erfassung der Fehlerart geschaltet sind, wobei das Schließen eines einer bestimmten Fehlerart zugeordneten Schalters die Verriegelung des Leistungsschalters in der Ausschaltstellung bewirkt, wenn der erfaßte Fehler mit der eingestellten Fehlerart übereinstimmt.

5. Leistungsschalter nach einem der Ansprüche 1 bis 4, dadurch gekennzeichnet, daß der Auslöser einen Rückstelleingang (8) aufweist und die Verriegelungs-Steuerorgane (6) mit einem Entriegelungsbefehl beaufschlagt (9), wenn dem Rückstelleingang (8) ein Rückstellbefehl zugeführt wird.

6. Leistungsschalter nach einem der Ansprüche 1 bis 5, dadurch gekennzeichnet, daß die Verriegelungs-Steuerorgane (6) eine Spule (23) umfassen, die an Spannung gelegt wird, wenn sie durch den Auslöser (5) mit einem Verriegelungsbefehl beaufschlagt wird.

7. Leistungsschalter nach Anspruch 6, dadurch gekennzeichnet, daß die Spule (23) direkt auf ein mechanisches Verriegelungsorgan des Schaltmechanismus (3) wirkt.

8. Leistungsschalter nach Anspruch 6, dadurch gekennzeichnet, daß das Antriebsorgan (4) des Schaltmechanismus (3) als elektromechanisches Antriebsorgan (24) ausgeführt ist, das es ermöglicht, den Einschaltvorgang des Leistungsschalters elektrisch, über eine Fernbetätigungsfunktion anzusteuern.

9. Leistungsschalter nach Anspruch 8, dadurch gekennzeichnet, daß das elektromechanische Antriebsorgan einen Elektromagneten (24) umfaßt, der über einen Steuerschalter (25) an eine Stromversorgung angeschlossen ist, wobei die Verriegelungsmittel einen Schließer (26) umfassen, der in Reihe mit dem genannten Steuerschalter (25) liegt und dessen Öffnung durch die genannte Spule (23) gesteuert wird.

10. Leistungsschalter nach Anspruch 8, dadurch gekennzeichnet, daß das elektromechanische Antriebsorgan einen Einschalt-Elektromagneten (24) umfaßt, der über ein als Öffner ausgeführtes Steuerorgan (27) an eine Stromversorgung angeschlossen ist, wobei der Öffnungs- und anschließende Schließvorgang des Steuerorgans das Einschalten der Leistungsschalterkontakte bewirkt und die Spule (23) einen parallel zum genannten Steuerorgan (27) geschalteten Schließer (28) ansteuert.

## Claims

1. A circuit breaker comprising contacts (1), a contact actuating mechanism (3) and an electronic trip device (5) supplying a tripping signal to a control device (4) of the actuating mechanism (3) to bring about opening of the contacts in the event of a fault on a power supply system (2) to be monitored, the control device (4) of the actuating mechanism comprising means for locking the actuating mechanism in the open position, and the trip device comprising means for detecting the type of fault, a circuit breaker characterized in that the trip device comprises means (12) for selecting the faults which are to bring about locking, the circuit breaker comprising means (6) for controlling locking connected to the trip device (5) and controlling the locking means so as to lock the actuating mechanism (3) in the open position when the fault having brought about tripping corresponds to one of the faults selected by the selection means (12).

2. The circuit breaker according to claim 1, characterized in that the trip device (5) comprising a processing unit (10), the selection means (12) are connected to the processing unit.

3. The circuit breaker according to claim 1, characterized in that the trip device (5) comprises an interface (13) comprising inputs connected to the means for detecting the type of fault and inputs connected to the selection means (12), and whose output is connected to the means (6) for controlling locking.

4. The circuit breaker according to claim 1, characterized in that the selection means (12) comprise a plurality of switches (19,20,21) respectively between a common locking input (9) of the means (6,23) for controlling locking and a corresponding output (LR,CR,H) of the means for detecting the type of fault, closing of a switch associated with a predetermined type of fault resulting in locking of the circuit breaker in the open position if the fault detected is of this type.

5. The circuit breaker according to any one of the claims 1 to 4, characterized in that the trip device comprises an acknowledgement input (8) and supplies (9) an unlocking order to the means (6) for controlling locking when an acknowledgement order is applied to the acknowledgement input (8).

6. The circuit breaker according to any one of the claims 1 to 5, characterized in that the means (6) for controlling locking comprise a coil (23) supplied with power when a locking order is applied to it by the trip device (5).

7. The circuit breaker according to claim 6, characterized in that the coil (23) directly actuates a mechanical component locking the actuating mechanism (3).

8. The circuit breaker according to claim 6, characterized in that the control device (4) of the actuating mechanism (3) is an electro-mechanical control device (24) enabling closing of the circuit breaker to be controlled electrically, by remote control.

9. The circuit breaker according to claim 8, characterized in that the electromechanical control device comprising an electromagnet (24) connected to a power supply source by a control switch (25), the locking means comprise a normally closed contact (26), serially connected with said control switch (25), and whose opening is controlled by said coil (23).

10. The circuit breaker according to claim 8, characterized in that the electromechanical control device comprises a closing electro-magnet (24) connected to a power supply source by means of a normally closed control component (27), whose opening followed by closing brings about closing of the circuit breaker contacts, the coil (23) controlling a normally open contact (28), connected in parallel with said control component (27).
